(19) Europäisches Patentamt
European Patent Office
Office européen des brevets

(11) Veröffentlichungsnummer: **0 097 761**
**B1**

# (12) EUROPÄISCHE PATENTSCHRIFT

(45) Veröffentlichungstag der Patentschrift: **29.01.86**

(51) Int. Cl.⁴: **B 60 T 8/18**

(21) Anmeldenummer: **83101726.4**

(22) Anmeldetag: **23.02.83**

(54) **Durchsteuerndes Ventil.**

(30) Priorität: **26.06.82 DE 3223935**

(43) Veröffentlichungstag der Anmeldung: **11.01.84 Patentblatt 84/2**

(45) Bekanntmachung des Hinweises auf die Patenterteilung: ***29.01.86 Patentblatt 86/5***

(84) Benannte Vertragsstaaten: **AT CH DE FR GB LI SE**

(56) Entgegenhaltungen:
**DE - A - 1 802 370**
**DE - A - 2 849 762**
**FR - A - 1 355 219**
**FR - A - 2 446 430**

**GRUNDLEHRGANGS-HANDBUCH, Wabco Westinghouse Fahrzeugtechnik, März 1977/1, Seiten 200,201**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Bergemann, Klaus-Dieter, Dohmeyers Weg 2, D-3000 Hannover 91 (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 097 761 B1

## Beschreibung

Die Erfindung betrifft ein durchsteuerndes Ventil, insbesondere zur Anpassung des Bremsdrukkes einer Fahrzeugachse in Abhängigkeit vom Beladungszustand, gemäss dem Oberbegriff des Patentanspruchs 1.

Derartige, auch als Anpassungsventil bezeichnete Ventile, haben bei Verwendung in Nutzfahrzeugen die Aufgabe, den vom Motorwagen-Bremsventil kommenden Druck im Teilbremsbereich zu untersetzen, um, wegen der im Teilbremsbereich nicht so stark einsetzenden dynamischen Achslastverlagerung, eine Überbremsung der Vorderachse zu vermeiden. Eine weitere Aufgabe solcher Ventile besteht darin, einen schnellen Bremsdruckabbau zu gewährleisten.

Ein bekanntes Ventil dieser Art (Grundlehrgangs-Handbuch der Fa. WABCO Westinghouse GmbH vom März 1977/1) weist zwei teleskopartig zusammenwirkende Steuerkolben auf, mittels welcher eine kombinierte Einlass- und Auslassventileinrichtung betätigt wird. Der zweite Steuerkolben wird entgegen der Öffnungsrichtung des Einlassventils von einer Regelfeder belastet, so dass bei Druckbeaufschlagung der beiden Steuerkolben zuerst der erste Steuerkolben und erst nach Erreichen einer von der Regelfeder abhängigen Druckhöhe der zweite Steuerkolben zusätzlich wirksam wird. Die einander entgegengerichteten Wirkflächen des ersten Steuerkolbens sind so ausgelegt, dass vor dem Zuschalten des zweiten Steuerkolbens ein gegenüber dem eingesteuerten Druck untersetzter Druck ausgesteuert wird. Durch das Zuschalten des zweiten Steuerkolbens und der dadurch vergrösserten Aktionsfläche der in diesem Stadium zusammenwirkenden beiden Steuerkolben wird bei Erreichen von Gleichheit zwischen Eingangsdruck und Ausgangsdruck das Einlassventil des kombinierten Einlass- und Auslassventils in der Offenstellung gehalten und so die Druckuntersetzung aufgehoben. Da die gemeinsame vom Eingangsdruck beaufschlagte Aktionsfläche der beiden Steuerkolben jetzt grösser ist als die vom Ausgangsdruck beaufschlagte Reaktionsfläche des ersten Steuerkolbens, kann das Einlassventil der kombinierten Einlass- und Auslassventileinrichtung nicht in die Abschlussstellung (Einlassventil geschlossen) gelangen.

Dies hat zur Folge, dass beim Entlüftungsvorgang die dem Anpassungsventil nachgeschalteten Verbraucher nicht mehr auf dem kürzesten Weg über das Auslassventil sondern über das Einlassventil des kombinierten Einlass- und Auslassventils des Anpassungsventils und das diesem vorgeschaltete Druckmittelleitungssystem entlüftet werden. Aus diesem Umstand resultieren relativ lange Entlüftungszeiten und starke Geräuschentwicklung im Bereich des Fahrerhauses des Kraftfahrzeugs. Zudem wird sowohl bei vollbeladenem Fahrzeug als auch bei nur teilweise beladenem Fahrzeug stets zuerst ein untersetzter Druck und erst dann der volle Druck ausgesteuert. Dies hat den Nachteil, dass die Räder an der Vorderachse des Fahrzeugs im Teilbremsbereich möglicherweise unterbremst werden.

Der Erfindung liegt deshalb die Aufgabe zugrunde, ein durchsteuerndes Ventil der eingangs genannten Art zu schaffen, bei welchem die dem durchsteuernden Ventil nachgeschalteten Verbraucher in allen Betriebsweisen über das Auslassventil des durchsteuernden Ventils entlüftbar sind und welches die Möglichkeit bietet, einen geregelten Druck im Verhältnis von 1:1 auszusteuern, ohne vorher den Bereich des untersetzt ausgesteuerten Druckes durchfahren zu müssen.

Diese Aufgabe wird mit der im Patentanspruch 1 angegebenen Erfindung gelöst.

Weiterbildungen und vorteilhafte Ausgestaltungen der Erfindung werden in den Unteransprüchen aufgezeigt.

Beim erfindungsgemässen Ventil wird mit einfachen Mitteln erreicht, dass das Einlassventil auch bei einer Druckaussteuerung von 1:1 in die Schliessstellung bringbar ist und die Entlüftung der dem durchsteuernden Ventil nachgeschalteten Verbraucher stets über das Auslassventil des durchsteuernden Ventils zur Atmosphäre erfolgt. Das durchsteuernde Ventil lässt sich in vorteilhafter Weise sowohl in Abhängigkeit von der Beladung als auch in Abhängigkeit vom Eingangsdruck von untersetzter Druckaussteuerung auf eine geregelte Druckaussteuerung im Verhältnis von 1:1 umschalten. Anhand der Abbildung wird ein Ausführungsbeispiel der Erfindung nachstehend näher erläutert.

Die Abbildung zeigt ein Anpassungsventil dessen Steuerkolben eine zusätzliche vom Druck aus der Eingangskammer beaufschlagbare Wirkfläche aufweisen. Die von den zusätzlichen Wirkflächen der beiden Steuerkolben begrenzte Druckmittelkammer ist über ein extern angeordnetes Mehrwege-Magnetventil mit der Eingangskammer verbindbar.

In einem Ventilgehäuse 1 ist ein erster Steuerkolben 16 und ein zweiter Steuerkolben 10 verschiebbar angeordnet. Der erste Steuerkolben 16 begrenzt mit einer ersten Wirkfläche 31 eine Eingangskammer 2 und mit einer der ersten Wirkfläche 31 entgegengerichteten zweiten Wirkfläche 18 eine Ausgangskammer 26. Die Eingangskammer 2 ist über einen Druckmitteleingang 3 und das Druckmittelleitungssystem an das Motorwagen-Bremsventil angeschlossen. Über einen Druckmittelausgang 25 ist die Ausgangskammer 26 mit den Bremszylindern der Vorderachse des Fahrzeugs verbunden. Die der Ausgangskammer 26 zugewandte zweite Wirkfläche 18 des ersten Steuerkolbens 16 ist grösser ausgebildet als die die Eingangskammer 2 begrenzende erste Wirkfläche 31. Zwei in entsprechenden Umfangsnuten des ersten Steuerkolbens 16 gelagerte Dichtringe 17 und 30 dichten die Ausgangskammer 26 und die Eingangskammer 2 gegeneinander ab, wobei der erste Dichtring 17 an der Wandung der den ersten Steuerkolben 16 aufnehmenden Gehäusebohrung und der zweite Dichtring 30 an der Innenwand des teleskopartig mit dem ersten Steuerkolben 16 zuzusammenwirkenden zweiten Steuerkolben 10 anliegt. Der zweite Steuerkolben 10 ist rohrförmig ausgebildet und weist an seiner der Eingangskammer 2 zugewandten Stirnseite einen sich radial nach aussen erstreckenden umlaufenden Vorsprung auf. Der umlaufende Vorsprung dient auf seiner der Eingangskammer 2 zugewandten Seite als erste Wirkfläche 8 und auf der gegenüberliegenden Seite als eine der ersten Wirkfläche 8 entgegengerichtete zweite Wirkfläche 32. Der zweite Steuerkolben 10 wird von einer Feder 11, die sich an einem Gehäusevorsprung 14 abstützt, in Richtung auf die Eingangskammer 2 zu beaufschlagt.

Im Boden des ersten Steuerkolbens 16 ist eine Ventilbohrung vorgesehen, deren Randbereich als Einlassventilsitz 28 ausgebildet ist. Der Einlassventilsitz 28 bildet zusammen mit einem ersten Teil 29 eines Ventilkörpers 24, 27 ein Einlassventil 28, 29. Ein zweites Teil 24 des Ventilkörpers 29, 27 liegt auf dem als Auslassventilsitz 20 ausgebildeten Randbereich einer im unteren Teil des Ventilgehäuses 1 vorgesehenen Auslassbohrung auf. Der Auslassventilsitz 20 bildet zusammen mit dem zweiten Ventilkörper 24 ein Auslassventil 20, 24, an welches ein zur Atmosphäre führender Druckmittelauslass 21 anschliesst. Der Druckmittelauslass 21 wird von einer an einem Gehäusesteg 23 befestigten, als ein zur Atmosphäre hin in die Offenstellung bringbares Rückschlagventil ausgebildeten Gummiplatte 22 verschlossen. Die beiden Ventilkörperteile 29 und 24 sind mittels einer Verbindungsstange 27 kraftschlüssig miteinander verbunden. Eine sich im Bereich der zweiten Wirkfläche 18 des ersten Steuerkolbens 16 abstützende und das zweite Teil 24 des Ventilkörpers 24, 27 belastende Druckfeder 19 hält über die Verbindungsstange 27 den ersten Teil 29 des Ventilkörpers 24, 27 auf dem Einlassventilsitz 28. Der erste Steuerkolben 16 weist auf seiner dem zweiten Steuerkolben 10 zugewandten Seite eine als dritte Wirkfläche 15 dienende Abstufung auf, die gleichzeitig als Anschlag für den zweiten Steuerkolben 10 dient. Die dritte Wirkfläche 15 ist so bemessen, dass sie zusammen mit der ersten Wirkfläche eine der zweiten Wirkfläche entgegengerichtete, gleichgrosse Gesamtwirkfläche bildet. Eine einerseits von der zweiten Wirkfläche 32 des zweiten Steuerkolbens 10 und andererseits von der dritten Wirkfläche 15 des ersten Steuerkolbens 16 begrenzte Druckmittelkammer 12 ist über einen Druckmittelanschluss 13, eine Druckmittelleitung 7, ein Mehrwege-Magnetventil 6 sowie eine Druckmittelleitung 5 an die zum Druckmitteleingang 3 für die Eingangskammer 2 führende Druckmittelleitung 4 angeschlossen. Mittels eines in einer entsprechenden Umfangsnut des zweiten Steuerkolbens 10 gelagerten Dichtringes 9 ist die Eingangskammer 2 druckdicht von der Druckmittelkammer 12 getrennt.

Die Funktion dieses Anpassungsventils wird nachstehend näher erläutert.

Bei eintlüftetem Bremssystem befindet sich das Anpassungsventil in der gezeigten Stellung. Der zweite Steuerkolben 10 liegt an der Stirnseite des Gehäuseoberteils an, das Einlassventil 28, 29 wird mittels der Druckfeder 19 in der Schliessstellung gehalten und das Auslassventil 20, 24 des kombinierten Einlass- und Auslassventils 28, 29, 20, 24 wird von dem sich in seiner oberen Lage befindlichen ersten Steuerkolben 16 in der Offenstellung gehalten. Wird bei leerem oder nur teilweise beladenem Fahrzeug vom Fahrer das Motorwagen-Bremsventil betätigt, so gelangt über die Druckmittelleitung 4 und den Druckmitteleingang 3 Druckluft in die Eingangskammer 2 und beaufschlagt sowohl die erste Wirkfläche 31 des ersten Steuerkolbens 16 als auch die erste Wirkfläche 8 des zweiten Steuerkolbens 10. Der sich in der Eingangskammer 2 aufbauende Druck verschiebt den ersten Steuerkolben 16 in Richtung auf die Ausgangskammer 26 zu. Das Ventilkörperteil 24 legt sich auf den Auslassventilsitz 20 auf, so dass das Auslassventil 20, 24 des kombinierten Einlass- und Auslassventils 20, 24, 28, 29 jetzt geschlossen ist. Da die Kraft der Feder 11 der auf die erste Wirkfläche 8 des zweiten Steuerkolbens 10 einwirkenden Kraft des Eingangsdruckes entgegengerichtet ist, verharrt der zweite Steuerkolben 10 in seiner Lage. Bei der weiteren Abwärtsbewegung des ersten Steuerkolbens 16 hebt das Ventilkörperteil 29 vom Einlassventilsitz 28 ab. Durch das jetzt geöffnete Einlassventil 28, 29 strömt die Druckluft aus der Eingangskammer 2 in die Ausgangskammer 26 und weiter durch den Druckmittelausgang 25 zu den Radbremszylindern der Vorderachse des Fahrzeugs. Der sich in den Radbremszylindern und somit auch in der Ausgangskammer 26 aufbauende Druck beaufschlagt die der ersten Wirkfläche 31 entgegengerichtete zweite Wirkfläche 18 des ersten Steuerkolbens 16. Der erste Steuerkolben 16 bewegt sich ein Stück aufwärts und der Einlassventilsitz 28 legt sich an das Ventilkörperteil 29 an. Sowohl das Einlassventil 28, 29 als auch das Auslassventil 20, 24 ist jetzt geschlossen. Da die zweite Wirkfläche 18 grösser ausgelegt ist als die erste Wirkfläche 31 wird das Kräftegleichgewicht zwischen den entgegengerichtet auf den ersten Steuerkolben 16 einwirkenden Kräften bereits hergestellt, wenn der Druck in den Bremszylindern und somit auch der Druck in der Ausgangskammer 26 noch nicht die Höhe des Druckes in der Eingangskammer 2 erreicht hat.

Ist der Druck in der Eingangskammer 2 soweit angestiegen, dass die entgegengerichtet auf den zweiten Steuerkolben 10 einwirkende Kraft der Feder 11 überwunden wird, so bewegt sich der zweite Steuerkolben 10 abwärts, setzt auf die als dritte Wirkfläche 15 dienende Abstufung des Steuerkolbens 16 auf und verschiebt diesen in Richtung auf die Ausgangskammer 26 zu. Das Einlassventil 28, 29 des kombinierten Einlass- und Auslassventils 28, 29, 20, 24 öffnet, die Druckluft strömt von der Eingangskammer 2 in die Ausgangskammer 26 und weiter durch den Druckmittelausgang 25 zu den Radbremszylindern. Da die vom Druck aus der Eingangskammer 2 beaufschlagte erste Wirkfläche 8 des zweiten Steuerkolbens 10 und die ebenfalls vom Eingangsdruck beaufschlagte erste Wirkfläche 31 des ersten Steuerkolbens 16 durch die jetzt mechanische Verbindung der beiden Steuerkolben 16, 10 eine Gesamtwirkfläche aufweisen, die grösser ist als die vom Druck aus der Ausgangskammer 26 entgegengerichtet beaufschlagte Wirkfläche des ersten Steuerkolbens 16, wird bei Erreichen von Druckgleichheit zwischen dem Eingangsdruck und dem Ausgangsdruck das Einlassventil 28, 29 so lange mechanisch in der Offenstellung gehalten, bis der Eingangsdruck abgesenkt wird. In dieser Phase wird ein Druck von 1:1 ausgesteuert. Wird die Eingangskammer 2 durch Umschalten des Motorwagen-Bremsventils entlüftet, so entweicht zunächst Druckluft aus der Ausgangskammer 26 und den Bremszylindern durch das noch offene Einlassventil 28, 29, die Eingangskammer 2, den Druckmitteleingang 3, die Druckmittelleitung 4 und das Motorwagen-Bremsventil zur Atmosphäre hin. Ist der Druck in der Eingangskammer 2 soweit abgesunken, dass die beiden Steuerkolben 16, 10 vom Ausgangsdruck und unter Mitwirken der Rückstellkraft der Regelfeder 11 nach oben verschoben wird, so schliesst das Einlassventil 28, 29 und das Auslassventil 20, 24 öffnet. Die Ausgangskammer 26 und somit auch die Radbremszylinder werden jetzt über das Auslassventil 20, 24 und den Druckmittelauslass 21 des Anpassungsventils entlüftet.

Wird bei vollbeladenem Fahrzeug das Motorwagen-Bremsventil betätigt, so strömt über die Druckmittelleitung 4 und den Druckmitteleingang 3 Druckmittel in die Eingangskammer 2. Da das Mehrwege-Magnetventil 6 aufgrund der höheren Belastung der Fahrzeugachse automatisch umgeschaltet worden ist, gelangt gleichzeitig mit der Druckeinsteuerung in die Eingangskammer 2 über die Druckmittelleitung 5, das auf Durchgang geschaltete Mehrwege-Magnetventil 6, die Druckmittelleitung 7 und den Druckmittelanschluss 13 Druckluft in die Druckmittelkammer 12. Durch die Druckbeaufschlagung der die Eingangskammer 2 begrenzenden ersten Wirkfläche 31 sowie die Druckbeaufschlagung der die Druckmittelkammer 12 begrenzenden dritten Wirkfläche 15 des ersten Steuerkolbens 16 wird dieser abwärts in Richtung auf die Ausgangskammer 26 zu verschoben. Dabei setzt das Ventilkörperteil 24 auf den Auslassventilsitz 20 auf. Das Auslassventil 20, 24 befindet sich jetzt in der Schliessstellung. Bei der weiteren Abwärtsbewegung des ersten Steuerkolbens 16 hebt der Einlassventilsitz 28 vom Ventilkörperteil 29 ab. Durch das jetzt geöffnete Einlassventil 28, 29 gelangt Druckluft aus der Eingangskammer 2 in die Ausgangskammer 26 und weiter durch den Druckmittelausgang 25 zu den Radbremszylindern der Vorderachse des Fahrzeugs. Da die Grösse der aus der dritten Wirkfläche 15 und der ersten Wirkfläche 31 vom Eingangsdruck beaufschlagte Gesamtwirkfläche des ersten Steuerkolbens 16 gleich ist der Grösse der entgegengerichteten, vom Druck aus der Ausgangskammer 26 beaufschlagten zweiten Wirkfläche 18, wird der erste Steuerkolben wieder nach oben verschoben und das Einlassventil 28, 29 geschlossen, sobald der Druck in den Radbremszylindern und somit auch der Druck in der Ausgangskammer 26 gleich ist dem Druck in der Eingangskammer 2. Der zweite Steuerkolben 10 verbleibt in seiner Ausgangsstellung, da seine vom Druck aus der Eingangskammer 2 beaufschlagte erste Wirkfläche 8 und seine vom Druck aus der Druckmittelkammer 12 beaufschlagte, der ersten Wirkfläche 8 entgegengerichtete zweite Wirkfläche 32 gleichgross sind.

Wird der Druck in der Eingangskammer 2 reduziert, so fährt der erste Steuerkolben 16 nach oben. Das Auslassventil 20, 24 wird in die Offenstellung gebracht und solange in der Offenstellung gehalten, bis der Druck in der Ausgangskammer 26 sowie in den Radbremszylindern soweit abgesenkt ist, dass sich die auf den ersten Steuerkolben 16 einwirkenden Kräfte wieder im Gleichgewicht befinden.

Es ist auch möglich, die zusätzliche Druckmittelkammer 12 über ein druckabhängig steuerbares Mehrwegeventil anzusteuern, so dass im Teilbremsbereich ein gegenüber dem Eingangsdruck untersetzter Druck ausgesteuert wird und bei weiter ansteigendem Eingangsdruck die Untersetzung durch Belüften der zusätzlichen Druckmittelkammer 12 und somit durch Zuschalten der dritten Wirkfläche 15 des ersten Steuerkolbens 16 die Druckuntersetzung aufgehoben und ein geregelter Druck im Verhältnis von 1:1 ausgesteuert wird. In diesem Fall erfolgt die Entlüftung der Radbremszylinder der Vorderachse direkt über das Auslassventil des Anpassungsventils, die Entlüftung der zusätzlichen Druckmittelkammer 12 erfolgt stets über den Auslass des Mehrwegeventils 6.

Wird die zusätzliche Druckmittelkammer 12 vom Druck aus einer separaten Druckmittelquelle, wie z.B. vom Ausgangsdruck eines ALB-Reglers beaufschlagt, so kann vom durchsteuernden Ventil ein Druck mit unterschiedlichen Kennlinien ausgesteuert werden.

## Patentansprüche

1. Durchsteuerndes Ventil, insbesondere zur Anpassung des Bremsdruckes einer Fahrzeugachse in Abhängigkeit vom Beladungszustand, mit folgenden Merkmalen:

a) es ist ein erster Steuerkolben (16) mit einer Ventilbohrung (28) vorgesehen, der zwischen einer Eingangskammer (2) und einer Ausgangskammer (26) angeordnet ist;

b) es ist ein Ventilkörper (29, 24) eines Doppelsitzventils vorgesehen, der mit der Ventilbohrung (28) ein Einlassventil (28, 29) zur Verbindung der Eingangskammer (2) mit der Ausgangskammer (26) und mit einer Auslassbohrung (20) ein Auslassventil (20, 24) zur Verbindung der Ausgangskammer (26) mit einem Druckmittelauslass (21) bildet;

c) der erste Steuerkolben (16) weist eine erste, mit dem Druck aus der Eingangskammer (2) in Öffnungsrichtung des Einlassventils (28, 29) beaufschlagte Wirkfläche (31) und eine zweite, mit dem Druck aus der Ausgangskammer (26) entgegen dem auf die erste Wirkfläche (31) einwirken-

den Druck beaufschlagte Wirkfläche (18) auf, wobei die erste Wirkfläche (31) kleiner ist als die zweite Wirkfläche (18);

d) es ist ein zweiter Steuerkolben (10) mit einer ersten Wirkfläche (8) vorgesehen, wobei die erste Wirkfläche (8) mit dem Druck aus der Eingangskammer (2) entgegen der Kraft einer Feder (11) in Richtung auf den ersten Steuerkolben (16) zu beaufschlagt ist.

e) der zweite Steuerkolben (10) weist eine zweite Wirkfläche (32) auf, welche der ersten Wirkfläche (8) entgegengerichtet ist;

f) der zweite Steuerkolben (10) ist so ausgebildet und so angeordnet, dass er nach Überwinden der Kraft der Feder (11) mit dem ersten Steuerkolben (16) im Sinne einer Vergrösserung der ersten Wirkfläche (31) des ersten Steuerkolbens (16) in Wirkverbindung bringbar ist;

gekennzeichnet durch folgende Merkmale:

g) der erste Steuerkolben (16) weist eine dritte Wirkfläche (15) auf, die der zweiten Wirkfläche (18) des ersten Steuerkolbens (16) entgegengerichtet ist;

h) die dritte Wirkfläche (15) des ersten Steuerkolbens (16) und die zweite Wirkfläche (32) des zweiten Steuerkolbens (10) sind mit einem Steuerdruck beaufschlagbar;

i) die dritte Wirkfläche (15) des ersten Steuerkolbens (16) ist so bemessen, dass bei Beaufschlagung der dritten Wirkfläche (15) mit Steuerdruck die auf den ersten Steuerkolben (16) einwirkenden Kräfte ins Gleichgewicht bringbar sind.

2. Durchsteuerndes Ventil nach Anspruch 1, dadurch gekennzeichnet, dass als Steuerdruck der Druck, welcher der Eingangskammer (2) zugeführt wird oder der Druck aus der Ausgangskammer (26) dient.

3. Durchsteuerndes Ventil nach Anspruch 1, dadurch gekennzeichnet, dass als Steuerdruck der Ausgangsdruck eines lastabhängigen Bremskraftreglers dient.

4. Durchsteuerndes Ventil nach Anspruch 1, dadurch gekennzeichnet, dass die dritte Wirkfläche (15) des ersten Steuerkolbens (16) und die zweite Wirkfläche (32) des zweiten Steuerkolbens (10) eine Druckmittelkammer (12) begrenzen.

5. Durchsteuerndes Ventil nach Anspruch 1 und Anspruch 4, dadurch gekennzeichnet, dass eine den Steuerdruck liefernde Steuerdruckquelle und die Druckmittelkammer (12) über eine Ventileinrichtung (6) miteinander verbindbar sind.

6. Durchsteuerndes Ventil nach Anspruch 5, dadurch gekennzeichnet, dass die Ventileinrichtung vom durchsteuernden Ventil örtlich getrennt angeordnet ist.

7. Durchsteuerndes Ventil nach Anspruch 5, dadurch gekennzeichnet, dass die Ventileinrichtung in Abhängigkeit vom Druck aus der Eingangskammer bzw. vom Druck aus der Ausgangskammer steuerbar ist.

8. Durchsteuerndes Ventil nach Anspruch 5, dadurch gekennzeichnet, dass die Ventileinrichtung (6) als Mehrwege-Ventil ausgebildet ist.

**Claims**

1. Control valve, especially for adjusting the brake pressure of a vehicle axle as a function of loading, having the following features:

a) a first control piston (16) having a valve bore (28) is provided, which piston is arranged between an inlet chamber (2) and an outlet chamber (26);

b) a valve member (29, 24) of a double seat valve is provided which forms together with the valve bore (28) an inlet valve (28, 29) for connecting the inlet chamber (2) with the outlet chamber (26) and forms together with an outlet bore (20) an outlet valve (20, 24) for connecting the outlet chamber (26) with a pressure medium outlet (21);

c) the first control piston (16) has a first working face (31) acted upon by the pressure from the inlet chamber (2) in the opening direction of the inlet valve (28, 29) and a second working face (18) acted upon by the pressure from the outlet chamber (26) against the pressure acting on the first working face (31), the first working face (31) being smaller than the second working face (18);

d) a second control piston (10) having a first working face (8) is provided, the first working face (8) being acted upon by the pressure from the inlet chamber (2) against the force of a spring (11) in the direction towards the first control piston (16);

e) the second control piston (10) has a second working face (32) which acts in the opposite direction to the first working face (8);

f) the second control piston (10) is so constructed and arranged that, after overcoming the force of the spring (11), it can be brought into operative connection with the first control piston (16) in the sense of enlarging the first working face (31) of the first control piston (16);

characterized by the following features:

g) the first control piston (16) has a third working face (15) which acts in the opposite direction to the second working face (18) of the first control piston (16);

h) the third working face (15) of the first control piston (16) and the second working face (32) of the second control piston (10) can be acted upon by a control pressure;

i) the third working face (15) of the first control piston (16) is of such dimensions that when the control pressure acts upon the third working face (15) the forces acting on the first control piston (16) can be brought into equilibrium.

2. Control valve according to claim 1, characterized in that there serves as control pressure the pressure that is conveyed to the inlet chamber (2) or the pressure from the outlet chamber (26).

3. Control valve according to claim 1, characterized in that there serves as control pressure the outlet pressure of a load-dependent brake-force regulator.

4. Control valve according to claim 1, characterized in that the third working face (15) of the first control piston (16) and the second working face (32) of the second control piston (10) define a pressure medium chamber (12).

5. Control valve according to claim 1 and claim 4, characterized in that a control pressure source supplying the control pressure and the pressure medium chamber (12) can be connected with each other *via* a valve device (6).

6. Control valve according to claim 5, characterized in that the valve device is arranged so that it is spatially separated from the control valve.

7. Control valve according to claim 5, characterized in that valve device can be controlled in dependence on the pressure from the inlet chamber or the pressure from the outlet chamber.

8. Control valve according to claim 5, characterized in that the valve device (6) is constructed as a multi-way valve.

**Revendications**

1. Soupape modulatrice, en particulier destinée à corriger la pression de freinage d'un essieu de véhicule en fonction de l'état de charge, présentant les particularités suivantes:

a) il est prévu un premier piston de commande (16) muni d'un perçage de soupape (28) qui est disposé entre une chambre d'entrée (2) et une chambre de sortie (26);

b) il est prévu un corps de soupape (29, 24) appartenant à une soupape à deux sièges, qui forme, avec le perçage de soupape (28), une soupape d'entrée (28, 29) servant à relier la chambre d'entrée (2) à la chambre de sortie (26) et avec un perçage de sortie (20), une soupape de sortie (20, 24) destinée à relier la chambre de sortie (26) à une sortie de fluide sous pression (21);

c) le premier piston de commande (16) présente une première surface effective (31) sollicitée par la pression provenant de la chambre d'entrée (2) dans le sens de l'ouverture de la soupape d'entrée (28, 29) et une deuxième surface effective (18), sollicitée par la pression provenant de la chambre de sortie (26) en antagonisme par rapport à la pression agissant sur la première surface effective (31), la première surface effective (31) étant plus petite que la deuxième surface effective (18);

d) il est prévu un deuxième piston de commande (10) présentant une première surface effective (8), la première surface effective (8) étant sollicitée par la pression provenant de la chambre d'entrée (2) en antagonisme par rapport à la force d'un ressort (11), dans le sens allant vers le premier piston de commande (16);

e) le deuxième piston de commande (10) présente une deuxième surface effective (32) qui est dirigée en sens inverse de la première surface effective (8);

f) le deuxième piston de commande (10) est constitué et agencé de manière que, lorsque la force du ressort (11) a été surmontée, il puisse être mis en liaison active avec le premier piston de commande (16) dans le sens tendant à agrandir la première surface effective (31) du premier piston de commande (16);

caractérisée par les caractéristiques suivantes:

g) le premier piston de commande (16) présente une troisième surface effective (15) qui est dirigée en sens inverse de la deuxième surface effective (18) du premier piston de commande (16);

h) la troisième surface effective (15) du premier piston de commande (16) et la deuxième surface effective (32) du deuxième piston de commande (10) peuvent être sollicitées par une pression de commande;

i) la troisième surface effective (15) du premier piston de commande (16) est dimensionnée de manière que, lorsque la troisième surface effective (15) est sollicitée par la pression de commande, les forces qui agissent sur le premier piston de commande (16) puissent être mises en équilibre.

2. Soupape modulatrice selon la revendication 1, caractérisée en ce que, en qualité de pression de commande, on utilise la pression qui est amenée à la chambre d'entrée (2) ou la pression provenant de la chambre de sortie (26).

3. Soupape modulatrice selon la revendication 1, caractérisée en ce qu'on utilise comme pression de commande la pression de sortie d'un régulateur de force de freinage sensible à la charge.

4. Soupape modulatrice selon la revendication 1, caractérisée en ce que la troisième surface effective (15) du premier piston de commande (16) et la deuxième surface effective (32) du deuxième piston de commande (10) délimitent une chambre de fluide sous pression (12).

5. Soupape modulatrice selon la revendication 1 et la revendication 4, caractérisée en ce qu'une source de pression de commande qui fournit la pression de commande et la chambre de fluide sous pression (12) peuvent être reliées l'une à l'autre par un dispositif obturateur (6).

6. Soupape modulatrice selon la revendication 5, caractérisée en ce que le dispositif obturateur est agencé en un emplacement distinct de celui de la soupape modulatrice.

7. Soupape modulatrice selon la revendication 5, caractérisée en ce que le dispositif obturateur peut être commandé en fonction de la pression provenant de la chambre d'entrée ou en fonction de la pression provenant de la chambre de sortie.

8. Soupape obturatrice selon la revendication 5, caractérisée en ce que le dispositif obturateur (6) est constitué par une valve à plusieurs voies.

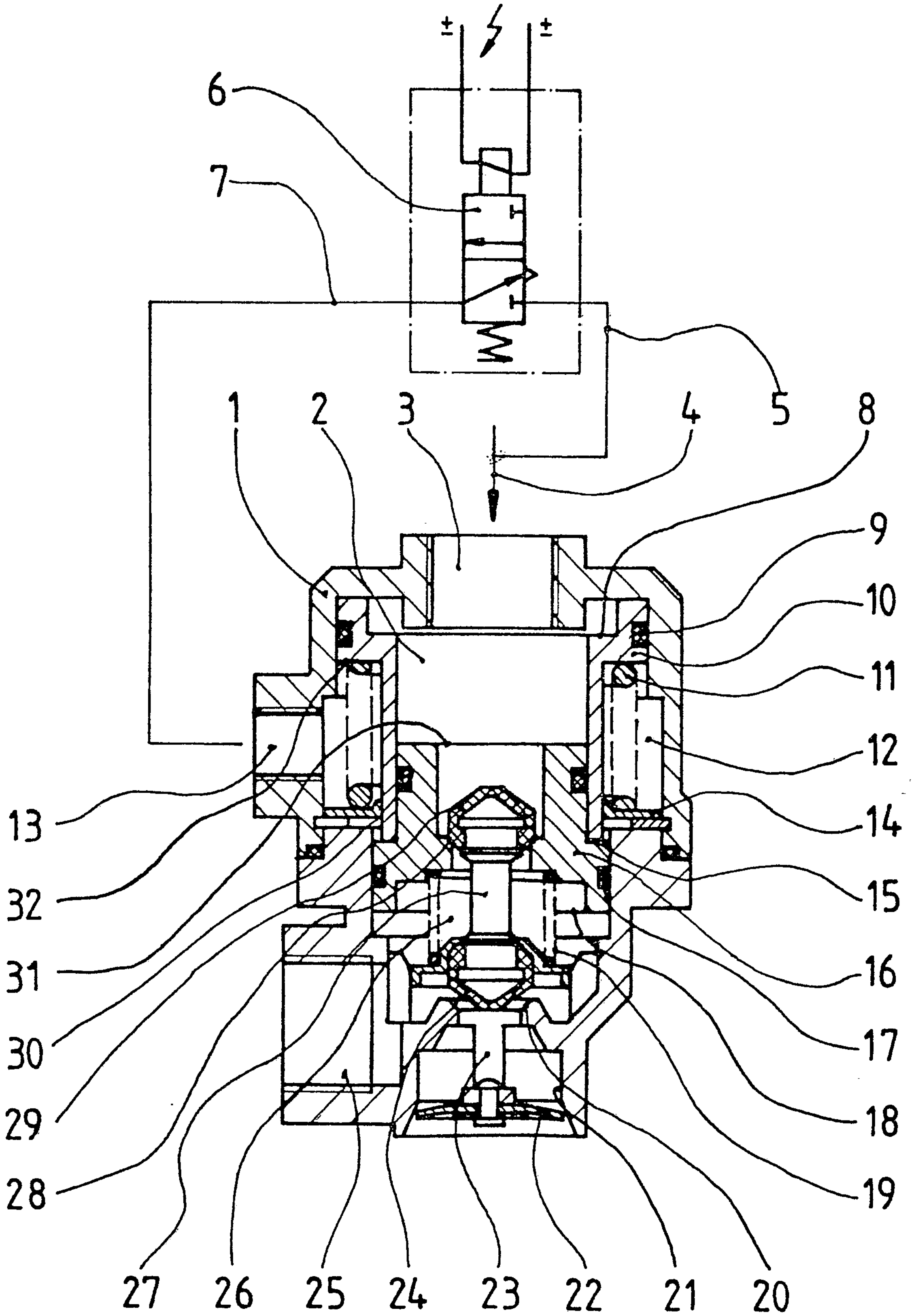
±
±
6
7
5
1
2
3
4
8
9
10
11
12
13
14
32
15
31
16
30
17
29
18
28
19
27
26
25
24
23
22
21
20